# EUROPEAN PATENT SPECIFICATION

(11) **EP 0 930 148 B1**
(45) Date of publication and mention of the grant of the patent: **12.09.2001**
(21) Application number: 98830763.3
(22) Date of filing: 17.12.1998
(51) Int. Cl.: B29C 57/04, B29C 55/26

(54) **Method and apparatus for expanding and conferring a cup shape to the terminal junction segment of bi-axially oriented pipes made of thermoplastic material**
Verfahren und Vorrichtung zum Ausweiten und topfartigen Formen des Endverbindungsbereiches von biaxial orientierten Rohren aus einem thermoplastischen Kunststoff
Procédé et dispositif pour élargir et donner une forme évasée au segment d'extrémité de raccordement de tuyaux orientés biaxialement en matériau thermoplastique

(30) Priority: 19.01.1998 IT RN980002; 26.02.1998 IT RN980006
(43) Date of publication of application: 21.07.1999
(73) Proprietor: SICA S.p.A., 48011 Alfonsine (RA) (IT)
(72) Inventor: Savioli, Leopoldo, 48011 Alfonsine (RA) (IT); Pezzi, Lauro, 48010 Mezzano (RA) (IT); Tabanelli, Giorgio, 48010 Cotignola (RA) (IT)
(74) Representative: Lanzoni, Luciano

(56) References cited:
- WO-A-97/10942
- US-A- 4 113 813
- US-A- 4 406 852
- PATENT ABSTRACTS OF JAPAN vol. 010, no. 207 (M-500), 19 July 1986 & JP 61 047236 A (SEKISUI CHEM CO LTD), 7 March 1986

## Description

The present invention relates to an enhanced method for expanding and conferring a cup shape to the terminal junction segment of bi-axially oriented pipes made of thermoplastic material, by means of a calibration expander, able to expand the terminal segment, previously heated to the plastic state, shaping therein an annular circumferential seat for housing a corresponding sealing gasket for the junction.

As is well known, apparatuses that operate on thermoplastic materials such as PVC, polyethylene (PE) and/or polyolefins, which are not bi-axially oriented, comprise furnaces for the prior heating of the terminal segment. This pipe portion is brought to a temperature of about 120°C or more, to obtain its adequate softening and enable then easily to fit it on the calibration expander, which dilates it and shapes it into the so-called "cup" conformation, to obtain an effective junction between the pipe thus treated and the end of another pipe, at the nominal diameter, once between the two ends is interposed the annular sealing gasket, stably positioned in the annular seat obtained in said terminal segment Within the scope of this technology the calibration expander, in this case said to be the mechanical expansion type, may present a crown of radially expandable sections able to be retracted on command, with the purpose of shaping the annular seat of the terminal segment when they are expanded, and to let the expander easily exit the shaped terminal segment, when they are retracted.

In this case it is evident that the annular gasket shall subsequently need to be inserted in the annular seat of the shaped and cooled terminal segment.

Alternatively to the above, the calibration expander may present an annular groove able simultaneously to retain the annular gasket introduced therein with a thrust flange which, once the gasket is inserted into the expander, causes it to be housed in the annular groove. Once this is accomplished, the phase of shaping the terminal segment starts, with the necessary aid of a flange for upsetting and holding the gasket, located downstream thereof. Subsequently, the expander is extracted, and in this case it can be defined as the free gasket type, after cooling the terminal segment, whilst the gasket remains trapped in the annular seat formed in the terminal segment.

Document US-A-4,406,852 discloses a method comprising a phase of preliminary heating the terminal segment of a pipe, to bring it to the plastic state, by inserting it in the gap of an annular gap furnace defined by an annular heating device with an inner mandrel. When the plastic state is reached, the terminal segment of the pipe is then axially pushed into the annular gap against a stop as if in a mold, to obtain thickening of the terminal segment itself before the final shaping operation. When the gap is completely filled, the terminal segment is extracted from the annular gap furnace and immediately introduced into a forming device comprising a calibration expander coaxially located in an annular device to define a mold for the final shaping of the terminal segment. The calibration expander and the external part of the mold are heated to maintain the terminal segment in the plastic state, while the terminal segment is axially pushed inside the mold until the mold itself is completely filled. The external surfaces of the shaped terminal segment are then partially cooled, prior to extraction from the mold, to avoid changes in shape and size of the teminal segment.

Document US-A-4,113,813 discloses a method for preventively heating three sections of the terminal segment: the rib zone (corresponding substantially to the annular seat of the sealing gasket in the finally shaped terminal segment), the lip zone (corresponding to the section from the end of the terminal segment to the rib zone) and the barrel zone (corresponding to the section between the rib zone and the pipe). These three sections are heated to three discrete, distinctly different, values of temperature, the rib zone being the hottest and the barrel zone being the coldest. This heating process consists of three distinct phases in a conventional forced air heater. In particular, in the first step the end of lip zone is covered and the lip and rib zones are inserted in the heater for a preselected time period, thereby limiting the heating substantially to the rib zone. To increase the softness of the lip zone, the cover is removed for a short time interval, and then all three zones are inserted in the heater for a final interval, further heating the rib zone to a relatively high temperature, while the lip and barrel zone are brought up to lower temperatures, the barrel zone being colder than the lip zone.

The aforesaid technologies refer, as stated, to the treatment of pipes made of thermoplastic material not bi-axially oriented.

The latter technology entails a considerable reduction in the thickness of pipes made of thermoplastic material, for the same resistance to internal pressure, since it has been ascertained that, in these materials, if molecules constituting the material are stretched or elongated in a same direction or in mutually orthogonal directions, the thickness of the material decreases, but not its resistance to the internal pressure designed for the untreated pipe.

Thus technologies have been developed for the bi-axial orientation of the thermoplastic material, entailing a circumferential dilation of the pipe and its elongation or stretching in the axial direction For example the international patent applications WO 95 25626, WO 95 25627, WO 95 25268. WO 95 30533 are mentioned. In this manner, for the same quantity or volume of material it is possible to produce a greater number of linear meters of pipe. which still meets the pressure resistance requirements origmally prescribed.

However, such materials have an intrinsic characteristic which negatively reflects on the final product: if the extruded pipe initially has a certain diameter and, after the bi-axial orientation process, a clearly greater diameter which is the nominal one to be obtained, it tends drastically to reduce in diameter, if subjected to temperatures of a certain level, such as those able to soften the material for the processes whereby the terminal junction segment is formed according to the technologies illustrated above for pipes in non bi-axial thermoplastic material.

This is because the molecules of the thermoplastic materials that are subjected to diameter change "remember" the previous physical state and tend to return to the original state.

Hence, if a pipe is extruded to a certain diameter which is subsequently increased, in a bi-axial orientation treatment, if it were subjected to the temperatures (120°C and higher) of the aforesaid furnaces its diameter would drastically decrease.

The aforesaid technologies, perfectly suited to shape the terminal segments of pipes made of thermoplastic material not subjected to bi-axial orientation processes or anyway particular subsequent diameter dilations, are therefore not at all applicable to pipes made of bi-axially oriented thermoplastic material.

The bi-axially oriented pipe would lose its thinness characteristics, tending to return to the original thickness, and therefore could not be fitted in the expander set for the useful nommal diameter, corresponding to the diameter of the bi-axially oriented pipe.

Moreover, even if it were possible to reduce the heating temperatures of the thermoplastic material to limit diameter reduction, the end segment thus obtained still would not be able to fit on the expander, because it would be too cold and thus would exert an excessively high progressive friction.

The applicant has also observed that, since there is a need for the temperature within the differentiated temperature furnace to be limited, in order to prevent the inlet to the terminal segment to he reduced excessively and to retain insofar as possible unaltered the bi-axial orientation characteristics, there could be a risk of damaging the terminal segment during a particularly stressful use of the treated pipe. Moreover, the shaping phase on the expander, though appropriately heated, may become excessively onerous, for pipes of considerable size and technical characteristics of resistance, both in terms of effort required, and of operating times, thus penalising the hourly production of the pieces.

The aim of the present invention is to eliminate all the drawbacks mentioned above, providing a method and an apparatus which, whilst using also previously known elements, solves the problems of effectively and simply shaping the terminal junction segment of pipes made of bi-axially onented thermoplastic material, and also allows to increase the hourly production of such treated pipes, reducing the duration of the longest working phase, which is the final shaping of the terminal segment on the calibration expander and guaranteeing the technical features of the product.

The invention is characterised by independent claims 1 and 11. A particular and original heat treatment of the terminal segment of the bi-axially oriented pipe allows to receive a particular shape, tapered and converging at the tip. Moreover, the pipe, by reducing its length increases its thickness just where this is very useful, the terminal segment being subjected to higher radial stresses, due to its diameter, greater than the nominal diameter of the pipe.

Furthermore, heating to an appropriate temperature the expander as well, allows the terminal segment not to cede heat in any way to the expander itself.

Under such conditions, the tapered terminal segment can be fitted on the expander, with acceptable friction and anyway favoured by the fact that the expander itself, when it penetrates in the terminal segment, finds increasing diameters.

In any case, during this phase, the terminal segment thickens further, allowing it to reach thicknesses that are able easily to withstand the nominal design pressures in such segments.

Furthermore, the invention, with a particular and original additional heat treatment of the terminal segment of the bi-axially oriented pipe. allows its easy and more rapid shaping. while also eliminating any risk of subsequent drawbacks in correspondence with the terminal segment and maintaining excellent characteristics of bi-orientability and perfect resistance to nominal design pressures.

Additionally, with the subject invention, it is also possible to modify and/or control the thickness of the terminal segment, allowing to reach even greater hicknesses, optimal easily to withstand the nominal design pressures in such segments, once again with no need, as was the case in prior art processes, preventively to thicken the terminal segments.

Moreover, to guarantee under any condition the perfect adherence of the terminal segment to the underlying expander, in order to obtain excellent precision and internal conformations of the shaped segment, use is also made of a heat flash obtained from an electrical coil positioned around the terminal segment, which forces the segment itself, until it is internally contrasted by the metallic expander, strongly to adhere thereto.

An appropriate cooling, which can also be superficial in this case, concludes the process.

Both the subject method and apparatus can use either a mechanical expansion expander, or free gasket expanders.

Further features and advantages of the invention shall become more readily apparent in the detailed description that follows, illustrated purely by way of non-limiting example in the accompanying drawings wherein:
- Figure 1 shows at the top a terminal junction segment of bi-axially oriented pipe and, at the bottom, a progressive heating furnace with the consequent plastic deformation of the aforesaid terminal segment;
- Figure 2 shows the apparatus relating to a free gasket expander, with some details;
- Figure 3 shows the apparatus of Figure 2 with the gasket inserted on the expander and with other details;
- Figure 4 shows the phase of progressively and forcedly introducing the expander inside the terminal segment of the pipe, with a further heating phase of the exterior of the terminal segment itself;
- Figure 5 shows a final cooling phase of the terminal segment,
- Figure 6 shows the extraction of a free gasket expander from the terminal segment already treated according to the invention,
- Figure 7 shows the extraction of a mechanical expansion expander from the terminal segment already treated according to the invention;

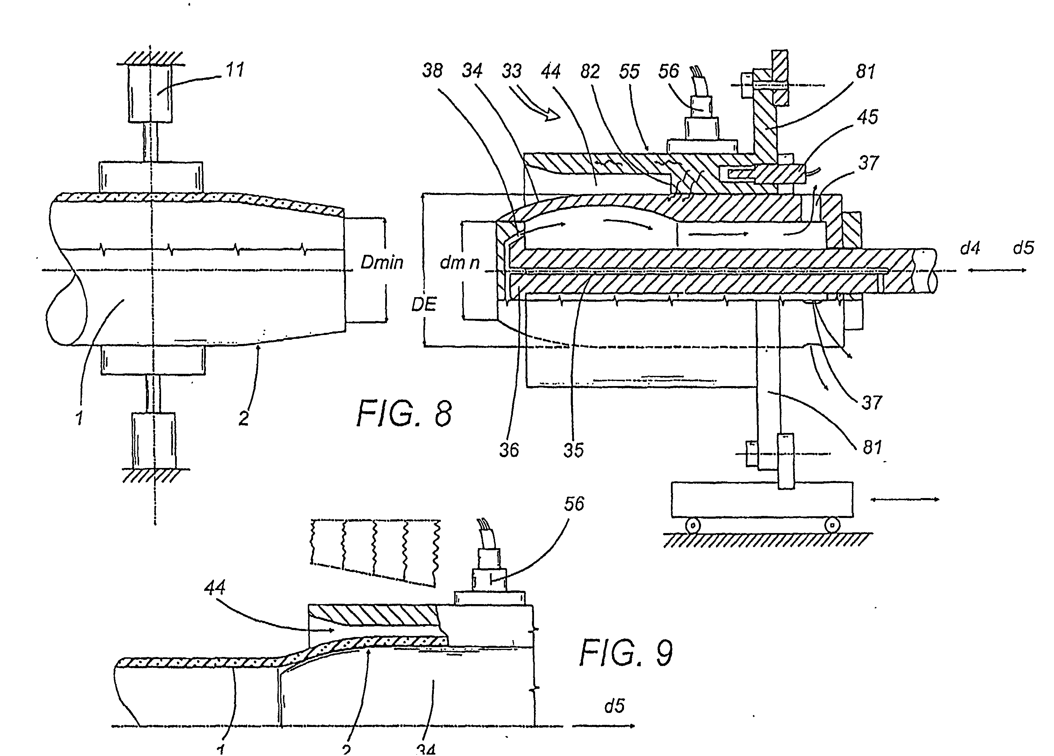

- Figure 8 shows the method and the apparatus according to a preferred embodiment of the invention, with a partially sectioned view and with some parts removed the better to highlight others;
- Figure 9 shows a part of the invention of Figure 8, in one of its characteristic phases.

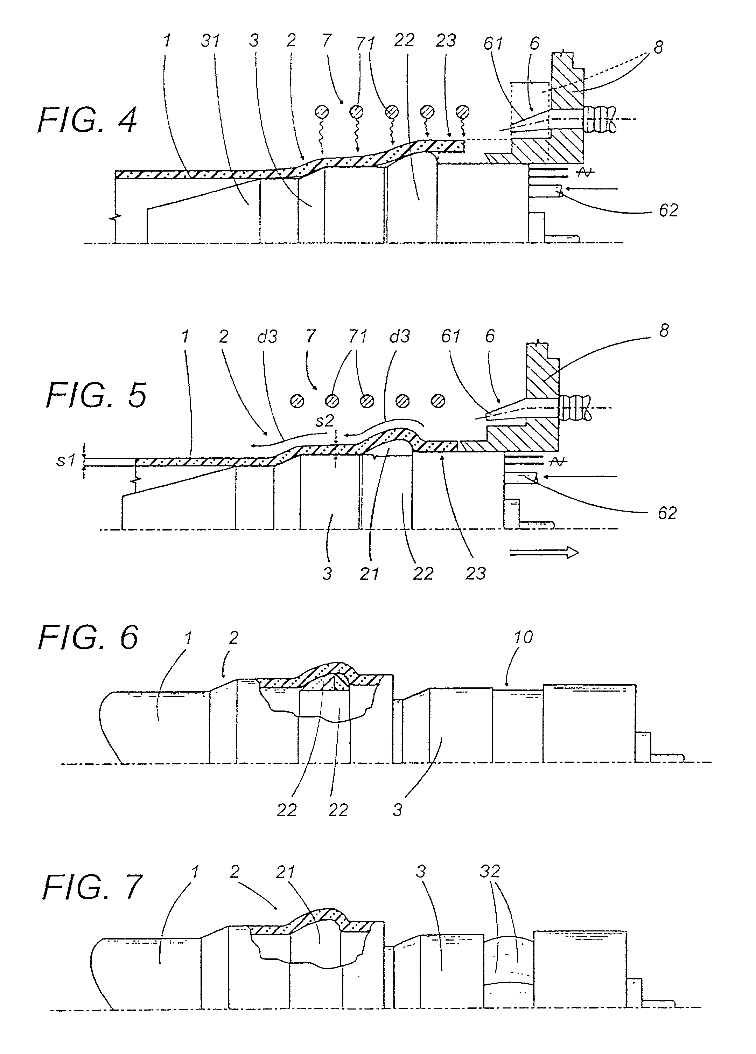

The subject invention relates to a method for expanding and conferring a cup shape to the terminal junction segment of bi-axially oriented pipes made of thermoplastic materials. As previously stated, in known methods and apparatuses, in order to execute the aforesaid shaping in non bi-axially oriented thermoplastic pipes, the use is known of a calibration expander (3), able to expand the terminal segment (2), previously heated to the plastic state, shaping its circumferential annular seat (21) for housing a corresponding sealing gasket (22) for the junction. Such calibration expander can be of the mechanical expansion type or of the type defined above as with free gasket. In the case at hand, either one of such expanders can be used. In the first case (see Figure 7, where an expander (3) with expandable sectors (32) in the retracted position is shown) it shall still be necessary to insert the gasket (22) inside the annular seat (21), after the end of operations and the exit of the expander from the terminal segment (2), whereas in the second case, as Figure 6 clearly shows, this shall not be necessary, since the gasket (22) is already in its seat and therein it will remain, even after the expander is extracted (3). Conversely, in this latter case technical elements shall be necessary, which shall be illustrated further on and which are not necessary in the first case.

The example illustrated herein which follows shall refer to the use of an expander of the second type illustrated above.

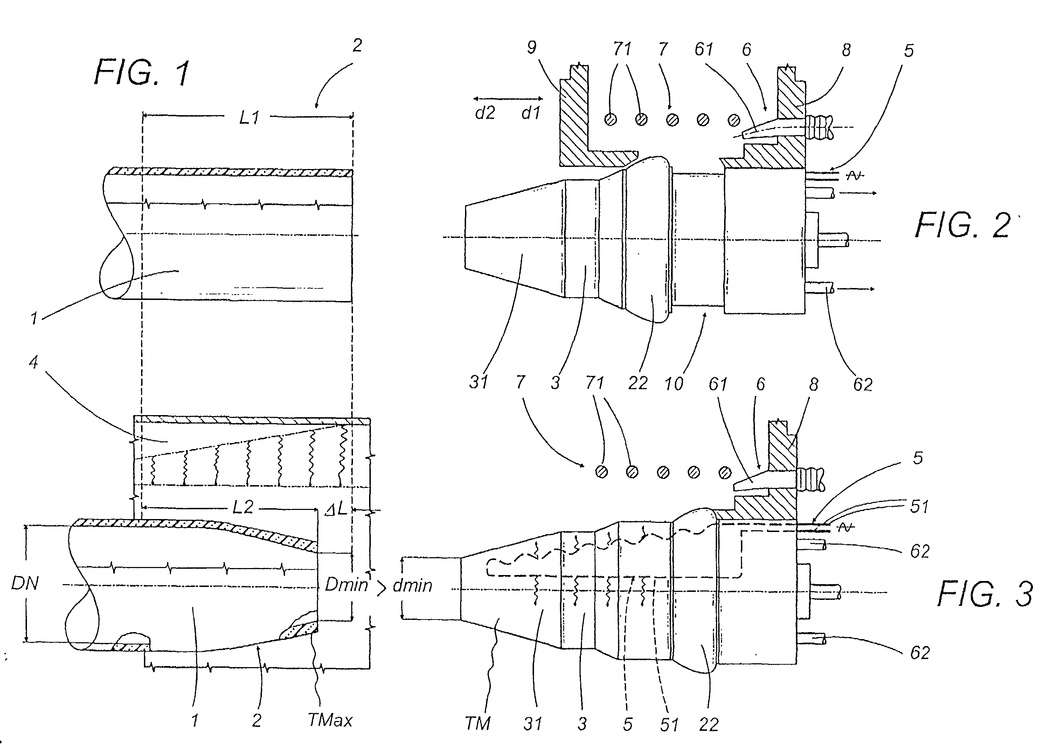

Preventively (see Figure 2), a thrust flange (9), movable in the two opposite directions (d1-d2), thrusts, in the direction (d1), the gasket (22) previously inserted on the expander (3), into the annular groove (10) of the expander (see Figure 3).

The subject method or process according to claim 1 comprises the phases listed below.

A first phase entails heating in a furnace (4) the terminal segment (2) of the bi-axially oriented pipe (1) to a differentiated temperature, increasing towards the end of the terminal segment (2). In the experimentations conducted by the applicant, temperatures vary within a non-limiting range that is sharply lower than the (constant) ones located in the usual furnaces to soften the segments (2) made of the usual, non bi-axially oriented, thermoplastic material (120 degrees centigrade and more). Such temperatures must also be controlled so that the inner diameter (DN) of the terminal segment (2) progressively reduces with the increase of the temperature. which becomes the maximum temperature (Tmax), at the end of the terminal segment (2). The top limit of said maximum temperature is defined by the need for the minimum inner diameter (Dmin) of the terminal segment (2) to be greater than the minimum diameter (dmin) of the front end of the expander (3), so the expander (3) can be introduced in the terminal segment (2).

A second phase entails heating the calibration expander (3) to a temperature (TM) that exceeds or equals the maximum temperature (Tmax) located at the end of said terminal segment (2), to prevent the expander from removing heat from the terminal segment (2) during the subsequent phase of progressively and forcedly introducing the heated expander inside the terminal segment (2) of the pipe (1), phase which thus entails no heat transfer from the terminal segment (2) of the pipe to the expander. Such introduction is enabled and facilitated by the progressive diameter increase of the terminal segment (2) whilst the expander (3) progressively penetrates therein.

A subsequent phase entails cooling at least the outer surface of the shaped terminal segment (2), prior to extracting said expander (3). It has been noted that even a single outer surface cooling of the pipe would suffice to avoid subsequent spontaneous deformations after the expander (3) is extracted.

In the preferred embodiment of the invention, the upper limit of said maximum temperature is defined by the need for the minimum inner diameter (Dmin) of the terminal segment (2) to be greater than the minimum diameter (dmn) of the front end of a rigid element (34) whereon more shall be stated further on, instead of the expander (3). According to this embodiment, after this phase, a preliminary phase is provided whereby the terminal segment (2) is further heated to a plastic deformation temperature suited to obtain a correct circumferential dilation of the terminal segment (2), introducing a rigid element (34) also heated and acting as an inner contrast, thereby inhibiting, at least during such heating, any possibility of retraction by the terminal segment (2), contributing to its dimensional stabilisation and thereby favouring its subsequent introduction on the calibration expander (3).

It is advantageous that the aforesaid preliminary dilation and heating phase occurs at a differentiated temperature, increasing as the end of the terminal segment (2) is approached and with an average value greater than that measurable in the furnace (4), in order to facilitate to the highest possible degree the subsequent introduction on the calibration expander (3), making the parts downstream of the end of the terminal segment (2) progressively more resistant.

In this case, the upper limit of the maximum temperature (Tmax), located at the end of the terminal section (2) inside the furnace (4) is such that the minimum inner diameter (Dmin) of the terminal section (2) must be greater than the minimum diameter (dmn) of the front end of the rigid element (34).

Simultaneously, the phase is provided of heating the calibration expander (3) to a temperature that minimises heat subtraction from the terminal segment (2) during the progressive forced introduction of the heated expander (3) inside the terminal segment (2) of the pipe (1) preventively treated according to the invention.

Such introduction, thanks to the aforesaid preliminary phase, is quite facilitated and the expander (3) essentially has only the task of shaping the annular seat (21), with the material at the most suitable temperature.

A subsequent phase provides for cooling at least the outer surface of the shaped terminal segment (2), prior to extracting said calibration expander (3).

It is interesting to note that, during the first phase, a reduction in the length (L1) of the terminal segment (2) occurs spontaneously, for instance by a measure (ΔL), as shown in Figure 1, which correspondingly causes an increase in the thickness of the thermoplastic material in said segment (2). Moreover, during the forced introduction of the expander (3) into the terminal segment (2) a phase whereby the wall of the terminal segment (2) thickens automatically sets in, which leads to a final thickness (S2) that is considerably greater than the initial thickness (S1) of the pipe, also with the decisive contribution of what occurs during said prelimmary phase. In the preliminary phase constituting the subject of the invention, a considerable thickening of the wall of the terminal segment (2) automatically sets in because the rigid element (34), of greater diameter than the inner diameter (DN) of the terminal segment (2) is movable in the two directions (d4,d5), since it has first to he forcedly and progressively introduced, in the direction (d4) inside the terminal segment (2), held locked in place, and then retracted, in the opposite direction (d5), from the segment, prevented from lengthening, in the same direction, being blocked by a stop (82), fixed with respect to the rigid element (34). Hence both the introduction of the terminal segment (2), and the extraction of the rigid element (34) cause the material to thicken.

All this thus allows completely to eliminate operations for the preventive thickening of the terminal segment (2), since such thickening takes place spontaneously and sufficiently, thanks to the two aforesaid phases.

From the point of view of the method, it is preferable also to provide, after the phase whereby the expander (3) is forcedly introduced into the terminal segment (2) and prior to cooling, an intermediate phase able to develop an additional flash of direct heat on the terminal segment (2), as Figure 4 clearly shows, thereby inducing such segment to contract spontaneously and to adhere closely on the underlying expander (3), to match its shape perfectly. In particular, prior to this phase, a flange (8) for upsetting and holding in place the gasket (22) is moved rearward, as shown in Figure 4, to allow also the retraction of the outer segment (23) which had previously climbed onto the foot of the upsetting flange (8), see dashed line in Figure 4.

The apparatus of the invention according to claim 11 comprises, in addition to said furnace (4), with the aforementioned characteristics, the calibration expander (3), which in particular comprises a long tapered segment (31) of the front part, able to facilitate the forced introduction of the expander (3) inside the terminal segment (2).

It also comprises:
- heating means (5), which are constituted by at least an electrical resistor (51) introduced inside the expander, as Figure 3 clearly shows, able to heat the calibration expander (3) to a temperature useful to minimise heat subtraction;
- means (6) for cooling at least the outer surface of the shaped terminal segment (2), prior to the extraction of said expander (3).

The latter are in practice constituted at least by devices (61) for blowing cooling air. In particular, the blowing devices (61) are positioned around the expander (3) and supported by said upsetting flange (8), to distribute the cooling air as uniformly as possible along directions (d3) tangential to the outer surface of the shaped terminal segment (2), as shown in Figure 5.

It is in any case possible to provide additional cooling means, such as a loop with a cooling fluid (62), introduced inside the expander (3).

The subject invention aims to improve the intrinsic characteristics of the terminal segment and to quicken its shaping into a cup.

The apparatus comprises a station (33) for the further preliminary heating and circumferential dilation of the terminal segment (2), before it is fitted onto the expander (3). The station is provided with the rigid element (34) able to be forcedly and progressively introduced inside the terminal segment (2), locked by bilateral clamps (11), after the optimal heating of the rigid element (34) by its own heating means (55), until allowing a temperature of correct plastic deformation of the terminal segment (2).

The rigid element (34) has a minimum front diameter (dmn) which progressively grows and then remains constant, on a value (DE) corresponding to the definitive one of the shaped terminal segment (2). The station (33) advantageously comprises a second furnace (44) with differentiated temperature increasing towards the interior of the furnace itself and of an average value greater than that measurable inside the previous furnace (4). Movements are regulated by the fact that the station (33) is slidingly supported and the rigid element (34) is movable in the two directions (d4,d5), with respect to the station (33) itself. The thickening of the wall of the terminal section takes place, in this case, both due to friction during the introduction of the terminal segment (2) on the rigid element (34), and during the subsequent extraction of the rigid element itself. The station (33) comprises a flange (81), identifying inside the second furnace (44) a stop (82) of the forward edge of the terminal segment (2), where it exerts stress during the extraction, in the direction (d5) of the rigid element (34) of the terminal segment itself. This causes the further thickening of the material. It has been observed that through this additional thickening constant ratios are obtained between the diameter and the corresponding thicknesses of the pipe in the significant areas, i.e. along the pipe itself, in correspondence with the cylindrical part of the terminal segment and in correspondence with the annular seat for the gasket.

The differentiated temperature is obtained by means of a flow of cooled fluid which moves from the exterior to the interior of the furnace. In particular, the rigid element (34) comprises internal ducting (35), where the cooled fluid flows, ending in correspondence with a diffuser (36), located at the free front end of the rigid element (34), which routes the flow of cooled fluid towards the opposite end, until it discharges outwards, through holes (37) obtained along the rigid element (34) itself. The diffuser (36), advantageously, is provided with inclined holes (38), so as to route the flow of cooled fluid along the inner walls of the rigid element (34). To the same purpose also contributes the fact that the internal wall thickness of the rigid element (34) increases towards the interior of said second furnace (44).

The subject apparatus comprises a probe (45). able to regulate the heat produced by a band resistor (56), positioned circumferentially around said second furnace (66). It is also advantageous to provide additional heating means (7), able to develop a further flash of direct heat on the terminal segment (2), thereby inducing such segment to contract and closely adhere on the underlying expander (3), in order to match its shape perfectly, means comprising for instance an electrical coil (71) wound around the expander (3).

## Claims

1. Method for expanding and conferring a cup shape to the terminal junction segment of bi-axially oriented pipes made of thermoplastic material, by:
- preventively heating a terminal segment (2) of a bi-axially oriented pipe (1) to the plastic state;
- progressively and forcedly introducing a calibration expander (3) inside the terminal segment (2), shaping therein a circumferential annular seat (21) for housing a corresponding sealing gasket (22) for the junction;
- cooling at least the outer surface of the shaped terminal segment (2), prior to the extraction of said expander (3);
**characterised in that**:
- the phase of heating the terminal segment (2) of the bi-axially oriented pipe (1) occurs in a furnace (4) having inside it a temperature distribution that uniformly increases with the distance from an inlet of the furnace (4), the terminal segment (2) of the bi-axially oriented pipe (1) being heated, while kept inside the furnace (4), to a corresponding differentiated temperature that increases approaching the end of the terminal segment (2), the differentiated temperature being controlled so that the inner diameter (DN) of the terminal segment (2) itself is progressively reduced as the temperature increases, which temperature becomes the maximum temperature (Tmax) at the end of the terminal segment (2), the terminal segment (2) of the pipe (1) simultaneously undergoing a reduction in its length (L1) by a measure (ΔL) with a corresponding increase in its thickness;
- a phase of heating the calibration expander (3) being provided prior to introducing the calibration expander (3) inside the terminal segment (2).

2. Method according to claim 1, **characterised in that**, during the forced introduction of the calibration expander (3) in the terminal segment (2) a phase automatically sets in whereby there is a thickening of the terminal segment (2), which reaches a final thickness (S2) greater than the initial thickness (S1) of the pipe.

3. Method according to claim 1, **characterised in that** the upper limit of the maximum temperature (Tmax), located at the end of the terminal segment (2) inside the furnace (4) is such that the minimum inner diameter (Dmin) of the terminal segment (2) must be greater than the minimum diameter (dmn) of the front end of the calibration expander (3).

4. Method according to claim 1, **characterised in that** the heating of the calibration expander (3) takes place at a temperature (TM) that is greater than or equal to the maximum temperature (Tmax) located at the end of the terminal segment (2).

5. Method according to claim 1, **characterised in that**, prior to the phase of introducing the heated calibration expander (3) inside the terminal segment (2), a preliminary phase is provided whereby the terminal segment is further heated to a plastic deformation temperature suited to obtain a correct circumferential dilation of the terminal segment (2) by means of an inner rigid element (34), thereby also inhibiting, at least during such heating, any possibility of retraction by the terminal segment (2), contributing to its dimensional stabilisation and in such a manner as to favour its subsequent introduction on the calibration expander (3).

6. Method according to claim 5, **characterised in that** the aforesaid preliminary heating and dilating phase also occurs at a differentiated temperature, increasing towards the end of the terminal segment (2) and with an average value greater than that measurable in the furnace (4), in order to facilitate to the highest possible degree the subsequent introduction on the expander (3), making progressively more resistant the walls downstream of the end of the terminal segment (2).

7. Method according to claim 5 or 6, **characterised in that** also the rigid element (34) is heated.

8. Method according to claim 5 or 6 or 7, **characterised in that** the thickness of the terminal segment (2) of the pipe (1) progressively increases during its differentiated heating inside the furnace (4), undergoing a phase whereby its length (L1) is reduced by a measure (ΔL), as well as during the forced introduction of the expander (3) in the terminal segment (2), and, lastly, during said preliminary further heating phase, wherein a considerably thickening ofthe wall of the terminal segment (2) sets in, since the rigid element (34), with greater diameter than the inner diameter (DN) of the terminal end (2) is movable in the two directions (d4,d5) since it has to be forcedly and progressively introduced, in the direction (d4) inside the terminal segment (2), locked in place, and then retracted, in the opposite direction (d5), therefrom, prevented from lengthening, in the same direction, being blocked by a stop (82), which is fixed with respect to the rigid element (34).

9. Method according to claim 5, **characterised in that** the upper limit of the maximum temperature (Tmax), located at the end of the terminal segment (2) inside the furnace (4) is such that the minimum inner diameter (Dmin) of the terminal segment (2) must be greater than the minimum diameter (dmn) of the front end of the rigid element (34).

10. Method according to any one of the previous claims, **characterised in that**, after the forced introduction of the expander (3) in the terminal segment (2) and prior to cooling, an intermediate phase is provided able to develop additional direct heat on the terminal segment (2), thereby inducing such segment to contract and adhere closely on the underlying expander (3) in order to match its shape perfectly.

11. Apparatus for expanding and conferring a cup shape to the terminal junction segment of bi-axially oriented pipes made of thermoplastic material, comprising:
- a calibration expander (3), able to expand the terminal segment (2), preventively heated to the plastic state, shaping it with a circumferential annular seat (21) for housing a corresponding sealing gasket (22) for the junction;
- means (6) for cooling at least the outer surface of the shaped terminal segment (2), prior to the extraction of said expander (3);
**characterised in that** it comprises
- a furnace (4) having inside it a temperature distribution that uniformly increases with the distance from an inlet of the furnace (4), the terminal segment (2) of the bi-axially oriented pipe (1) being heated, while kept inside the furnace (4), to a corresponding differentiated temperature that increases approaching the end of the terminal segment (2), the differentiated temperature being controlled so that the inner diameter (DN) of the terminal segment (2) itself is progressively reduced as the temperature increases, which temperature becomes the maximum temperature (Tmax) at the end of the terminal segment (2), the terminal segment (2) of the pipe (1) simultaneously undergoing a reduction in its length (L1) by a measure (ΔL) with a corresponding increase in its thickness.
- heating means (5) able to heat the calibration expander (3).

12. Apparatus according to claim 11, **characterised in that** the calibration expander (3) comprises a long tapered segment (31) of the front part, able to facilitate the forced introduction of the expander (3) inside the terminal segment (2), the front end of the expander (3) having a lesser minimum diameter (dmin) than the minimum inner diameter (Dmin) of the terminal segment (2).

13. Apparatus according to claim 11, **characterised in that** the heating means (5) comprise at least an electrical resistor (51) introduced inside the expander (3).

14. Apparatus according to claim 12, **characterised in that** the cooling means (6) comprise at least devices (61) for blowing cooling air.

15. Apparatus according to claim 14, **characterised in that** the cooling means (6) further comprise a loop with cooling fluid (62), introduced inside the expander (3).

16. Apparatus according to claim 14, comprising an upsetting flange (8), positioned downstream of the end of the terminal segment (2) of the pipe (1) fitted onto the expander (3), **characterised in that** said blowing devices (61) are positioned around the expander (3) and supported by said upsetting flange (8).

17. Apparatus according to claim 12, **characterised in that** it comprises a station (33) for the further preliminary heating and circumferential dilation of the terminal segment (2), before it is fitted on the calibration expander (3), said station (33), being provided at least with a rigid element (34) able to be forcedly and progressively introduced inside the terminal segment (2), locked by bilateral clamps (11), after the optimal heating at least of the rigid element (34) by heating means (55), until allowing a temperature of correct deformation ofthe terminal segment (2), said rigid element (34) having a front minimum diameter (dmn) that increases progressively and then remains constant, on a value (DE) corresponding to the definitive one of the shaped terminal segment (2).

18. Apparatus according to claim 17, **characterised in that** the station (33) comprises a second furnace (44) with differentiated temperature increasing towards the interior of the furnace itself and with average value greater than that measurable inside the previous furnace (4).

19. Apparatus according to claim 17, **characterised in that** the station (33) is supported slidingly and the rigid element (34) is movable in the two directions (d4,d5), with respect to the station (33) itself.

20. Apparatus according to claim 19, **characterised in that** the station (33) comprises a flange (81), identifying within the second furnace (44) a stop (82) of the front edge of the terminal segment (2), where it exerts stress during extraction, in the direction (d5), of the rigid element (34) of the terminal segment itself.

21. Apparatus according to claim 18, **characterised in that** said second furnace (44) comprises, within it, a flow of cooled fluid which moves from the exterior to the interior of the furnace, to create its said differentiated temperature.

22. Apparatus according to any one of the claims from 18 to 21, **characterised in that** it comprises a probe (45) able to regulate the heat produced by a band resistor (56), arranged circumferentially around said second furnace (44).

23. Apparatus according to claim 18, **characterised in that** the rigid element (34) has an internal wall thickness which increases towards the interior of said second furnace (44).

24. Apparatus according to claim 21, **characterised in that** the rigid element (34) comprises a ducting (35) where the cooled fluid flows, ending in correspondence with a diffuser (36), located at the free front end of the rigid element (34), which routes the flow of cooled fluid towards the opposite end, until discharging outwards, through holes (37) obtained along the rigid element (34) itself.

25. Apparatus according to claim 24, **characterised in that** said diffuser (36) is provided with holes (38) inclined in such a way as to route the flow of cooled fluid along the inner walls of the rigid element (34).

26. Apparatus according to any of the claims from 11 to 25, **characterised in that** it comprises further heating means (7), located in correspondence with the expander (3), able to develop additional direct heat on the terminal segment (2), thereby inducing such segment to contract and closely adhere on the underlying expander (3), to match its shape perfectly.

27. Apparatus according to claim 26, **characterised in that** said further heating means (7) comprise an electrical coil (71) wound around the expander (3).

## Patentansprüche

1. Verfahren zum Ausweiten und topfartigen Formen des Endverbindungsbereiches von biaxial orientierten Rohren aus einem thermoplastischen Kunststoff, durch:
- vorheriges Erwärmen eines Endbereiches (2) von einem biaxial orientierten Rohr (1) bis zu einem plastifizierten Zustand;
- allmähliches und forciertes Einschieben eines Kalibrierkopfes (3) in das Innere des Endbereiches und Ausformen in diesem eines umlaufenden, ringförmigen Sitzes (21) zur Aufnahme einer entsprechenden Dichtung (22) für die Verbindung;
- Kühlen von wenigstens der äusseren Oberfläche des geformten Endbereiches (2) noch vor dem Herausziehen des genannten Kalibrierkopfes (3); **dadurch gekennzeichnet, dass**
- die Phase des Erwärmens des Endbereiches (2) des biaxial orientierten Rohres (1) erfordert, dass ein Wärmofen (4) im Inneren eine Temperaturverteilung hat, die mit dem Abstand von einem Einlass des Wärmofens (4) zunimmt, wobei der Endbereich (2) des biaxial orientierten Rohres (1) erwärmt wird, während er im Inneren des Wärmofens (4) gehalten ist, und zwar auf eine entsprechende, differenzierte Temperatur, die sich zum Ende des Endbereiches (2) hin erhöht, wobei die differenzierte Temperatur so gesteuert wird, dass der Innendurchmesser (DN) des Endbereiches (2) selbst bei Zunahme der Temperatur allmählich reduziert wird, welche Temperatur am Ende des Endbereiches (2) ihren Höchstwert (Tmax) erreicht, und wobei der Endbereich (2) des Rohres (1) gleichzeitig einer Reduzierung in der Länge (L1) um ein Mass (ΔL) unterzogen wird, und zwar unter entsprechender Zunahme seiner Wanddicke;
- eine Phase des Aufheizens des Kalibrierkopfes (3) vor dem Einschieben des Kalibrierkopfes (3) in das Innere des Endbereiches (2) vorgesehen ist.

2. Verfahren nach Patentanspruch 1, **dadurch gekennzeichnet, dass** während des forcierten Einschiebens des Kalibrierkopfes (3) in den Endbereich (2) automatisch eine Phase einsetzt, bei welcher eine Verdickung des Endbereiches (2) erfolgt, welche eine Enddicke (S2) erreicht, die stärker als die Anfangsdicke (S1) des Rohres ist.

3. Verfahren nach Patentanspruch 1, **dadurch gekennzeichnet, dass** die obere Grenze der Höchsttemperatur (Tmax), die sich am Ende des Endbereiches (2) im Inneren des Wärmofens (4) abzeichnet, eine solche ist, dass der Mindestinnendurchmesser (Dmin) des Endbereiches (2) grösser sein muss als der Mindestdurchmesser (dmn) des vorderen Endes des Kalibrierkopfes (3).

4. Verfahren nach Patentanspruch 1, **dadurch gekennzeichnet, dass** das Aufheizen des Kalibrierkopfes (3) bei einer Temperatur (TM) erfolgt, die höher ist als oder gleich wie die Höchsttemperatur (Tmax), die sich am Ende des Endbereiches (2) befindet.

5. Verfahren nach Patentanspruch 1, **dadurch gekennzeichnet, dass** vor der Phase des Einschiebens des aufgeheizten Kalibrierkopfes (3) in das Innere des Endbereiches (2) eine Phase vorgesehen ist, bei welcher der Endbereich weiter bis zu einer Temperatur der plastischen Verformung erwärmt wird, die geeignet ist, eine korrekte umlaufende Aufweitung des Endbereiches (2) mit Hilfe eines internen, starren Elementes (34) zu erhalten, wobei ebenfalls wenigstens während des Erwärmens jede Möglichkeit eines Zusammenziehens des Endbereiches (2) verhindert wird, wodurch zu dessen Abmessungsstabilisierung beigetragen wird, und zwar auf solche Weise, um das anschliessende Aufschieben auf den Kalibrierkopf (3) zu erleichtern.

6. Verfahren nach Patentanspruch 5, **dadurch gekennzeichnet, dass** die vorgenannte vorangehende Erwärm- und Aufweitphase ebenfalls bei einer differenzierten Temperatur erfolgt, die zum Ende des Endbereiches (2) hin zunimmt und einen durchschnittlichen Wert aufweist, der grösser ist als der in dem Wärmofen (4) messbare, um so zu einem höchstmöglichen Grad das anschliessende Einschieben des Kalibrierkopfes (3) zu erleichtern, wobei die Wände stromabwärts vom Ende des Endbereiches (2) allmählich widerstandsfähiger gemacht werden.

7. Verfahren nach Patentanspruch 5 oder 6, **dadurch gekennzeichnet, dass** auch das starre Element (34) aufgeheizt wird.

8. Verfahren nach Patentanspruch 5 oder 6 oder 7, **dadurch gekennzeichnet, dass** die Dicke des Endbereiches (2) des Rohres (1) während seines differenzierten Erwärmens im Inneren des Wärmofens allmählich zunimmt, wobei er einer Phase unterzogen wird, in welcher seine Länge (L1) um ein Mass (ΔL) reduziert wird, sei es während des forcierten Einschiebens des Kalibrierkopfes (3) in den Endbereich (2) wie auch schliesslich während der vorherigen weiteren Erwärmphase, wobei eine beachtliche Verdickung der Wand des Endbereiches (2) einsetzt, da das starre Element (34) mit grösserem Durchmesser als der Innendurchmesser (DN) des Endbereiches (2), das in beiden Richtungen (d4, d5) beweglich ist, zunächst forciert und allmählich in der Richtung (d4) in das Innere des Endbereiches (2) eingeschoben werden muss, dort blockiert und dann in der entgegengesetzten Richtung (d5) aus diesem herausgezogen wird, wobei der Endbereich daran gehindert wird, sich in der gleichen Richtung zu verlängern, und zwar durch einen Anschlag (82), der im Verhältnis zu dem starren Element (34) feststehend ist.

9. Verfahren nach Patentanspruch 5, **dadurch gekennzeichnet, dass** die obere Grenze der Höchsttemperatur (Tmax), die sich am Ende des Endbereiches (2) im Inneren des Wärmofens (4) befindet, eine solche ist, dass der Mindestinnendurchmesser (Dmin) des Endbereiches (2) grösser sein muss als der Mindestdurchmesser (dmn) des vorderen Endes des starren Elementes (34).

10. Verfahren nach einem beliebigen der vorstehenden Patentansprüche, **dadurch gekennzeichnet, dass** nach dem forcierten Einschieben des Kalibrierkopfes (3) in den Endbereich (2) und vor dem Kühlen eine Zwischenphase vorgesehen ist, in der Lage, eine zusätzliche direkte Wärme auf den Endbereich (2) zu erzeugen, wodurch ein solcher Abschnitt dazu gebracht wird, sich zusammenzuziehen und dicht an dem darunterliegenden Kalibrierkopf (3) anzuliegen, so dass es sich perfekt dessen Form anpasst.

11. Vorrichtung zum Ausweiten und topfartigen Formen des Endverbindungsbereiches von biaxial orientierten Rohren aus einem thermoplastischen Kunststoff, enthaltend:
- einen Kalibrierkopf (3), der in der Lage ist, den Endbereich (2) nach vorherigem Erwärmen bis zu einem plastifizierten Zustand aufzuweiten, wobei er in diesen einen umlaufenden, ringförmigen Sitz (21) formt, um eine entsprechende Dichtung (22) für die Verbindung aufzunehmen;
- Mittel (6) zum Kühlen von wenigstens der äusseren Oberfläche des geformten Endbereiches (2), und zwar vor dem Herausziehen des genannten Kalibrierkopfes (3);
**dadurch gekennzeichnet, dass** sie wie folgt enthält:
- einen Wärmofen (4), der im Inneren eine Temperaturverteilung hat, die mit dem Abstand von einem Einlass des Wärmofens (4) zunimmt, wobei der Endbereich (2) des biaxial orientierten Rohres (1) erwärmt wird, während er im Inneren des Wärmofens (4) gehalten ist, und zwar auf eine entsprechende, differenzierte Temperatur, die sich zum Ende des Endbereiches (2) hin erhöht, wobei die differenzierte Temperatur so gesteuert wird, dass der Innendurchmesser (DN) des Endbereiches (2) selbst bei Zunahme der Temperatur allmählich reduziert wird, welche Temperatur am Ende des Endbereiches (2) ihren Höchstwert (Tmax) erreicht, und wobei der Endbereich (2) des Rohres (1) gleichzeitig einer Reduzierung in der Länge (L1) um ein Mass (ΔL) unterzogen wird, und zwar unter entsprechender Zunahme seiner Wanddicke;
- Heizmittel (5), die in der Lage sind, den Kalibrierkopf (3) aufzuheizen.

12. Vorrichtung nach Patentanspruch 11, **dadurch gekennzeichnet, dass** der Kalibrierkopf (3) einen langen, verjüngten Abschnitt (31) des vorderen Teils enthält, in der Lage, das forcierte Einschieben des Kalibrierkopfes (3) in das Innere des Endbereiches (2) zu erleichtern, wobei das vordere Ende des Kalibrierkopfes (3) einen geringeren Mindesdurchmesser (dmin) hat als der Mindestinnendurchmesser (Dmin) des Endbereiches (2).

13. Vorrichtung nach Patentanspruch 11, **dadurch gekennzeichnet, dass** die Heizmittel (5) wenigstens einen in das Innere des Kalibrierkopfes (3) eingeführten elektrischen Widerstand (51) haben.

14. Vorrichtung nach Patentanspruch 11, **dadurch gekennzeichnet, dass** die Kühlmittel (6) wenigstens eine Einrichtung (61) zum Einblasen von Kühlluft enthalten.

15. Vorrichtung nach Patentanspruch 14, **dadurch gekennzeichnet, dass** die Kühlmittel (6) einen Umlauf mit einer Kühlflüssigkeit (62) enthalten, der in das Innere des Kalibrierkopfes (3) eingesetzt ist.

16. Vorrichtung nach Patentanspruch 14, enthaltend einen Stauchflansch (8), der stromabwärts von dem Ende des Endbereiches (2) des Rohres (1) angeordnet und an dem Kalibrierkopf (3) befestigt ist, **dadurch gekennzeichnet, dass** die genannte Blaseinrichtung (61) rund um den Kalibrierkopf (3) positioniert ist und von dem Stauchflansch (8) getragen wird.

17. Vorrichtung nach Patentanspruch 12, **dadurch gekennzeichnet, dass** sie eine Station (33) zum weiteren vorherigen Erwärmen und umlaufenden Aufweiten des Endbereiches (2) enthält, bevor letzterer auf den Kalibrierkopf (3) geschoben wird, wobei die genannte Station (33) wenigstens mit einem starren Element (34) versehen ist, dazu bestimmt, forciert und allmählich in das Innere des Endbereiches (2) eingeschoben und durch beiderseitige Klemmvorrichtungen (11) blockiert zu werden, und zwar nach dem optimalen Aufheizen von wenigstens dem Starren Element (34) durch Heizmittel (55), bis zum Erlauben einer Temperatur zum korrekten Verformen des Endbereiches (2), wobei das genannte starre Element (34) einen vorderen Mindestdurchmesser (dmn) hat, der allmählich zunimmt und dann bei einem Wert (DE), der dem endgültigen Wert des geformten Endbereiches (2) entspricht, konstant bleibt.

18. Vorrichtung nach Patentanspruch 17, **dadurch gekennzeichnet, dass** die Station (33) einen zweiten Wärmofen (44) mit differenzierten Temperaturen enthält, die zum Innenraum des Wärmofens selbst hin zunehmen, und zwar mit einem durchschnittlichen Wert, der grösser ist als der in dem vorangegangenen Wärmofen (4) messbare.

19. Vorrichtung nach Patentanspruch 17, **dadurch gekennzeichnet, dass** die Station (33) verschiebbar getragen ist und das starre Element (34) in zwei Richtungen (d4, d5) im Verhältnis zu der Station (33) selbst bewegt werden kann.

20. Vorrichtung nach Patentanspruch 19, **dadurch gekennzeichnet, dass** die Station (33) einen Flansch (81) enthält, der im Inneren des zweiten Wärmofens (44) einen Anschlag (82) für die vordere Kante des Endbereiches (2) beschreibt, wo er während des Herausziehens in die Richtung (d5) des starren Elementes (34) des Endbereiches selbst eine Belastung bewirkt.

21. Vorrichtung nach Patentanspruch 18, **dadurch gekennzeichnet, dass** der genannte zweite Wärmofen (44) in seinem Inneren mit einem Umlauf für eine gekühlte Flüssigkeit versehen ist, welche sich von aussen nach innen des Wärmofens bewegt, um dessen genannte differenzierten Temperatur zu erzeugen.

22. Vorrichtung nach einem beliebigen der Patentansprüche von 18 bis 21, **dadurch gekennzeichnet, dass** sie eine Sonde (45) enthält, dazu bestimmt, die durch einen Bandwiderstand (56) erzeugte Hitze zu regulieren, der umlaufend um den genannten zweiten Wärmofen (44) angeordnet ist.

23. Vorrichtung nach Patentanspruch 18, **dadurch gekennzeichnet, dass** das starre Element (34) eine interne Wanddicke hat, die zum Innenraum des genannten zweiten Wärmofens (44) hin zunimmt.

24. Vorrichtung nach Patentanspruch 21, **dadurch gekennzeichnet, dass** das starre Element (34) einen Kanal (35) enthält, in welchem die gekühlte Flüssigkeit läuft, und der an einem Verteiler (36) endet, der an dem freien vorderen Ende des starren Elementes (34) angeordnet ist und den Strom der gekühlten Flüssigkeit in Richtung des entgegengesetzten Endes leitet bis zum Ablassen nach aussen durch Bohrungen (37), die entlang dem starren Element (34) selbst eingearbeitet sind.

25. Vorrichtung nach Patentanspruch 24, **dadurch gekennzeichnet**, dass der genannte Verteiler (36) mit Bohrungen (38) versehen ist, die auf solche Weise schräg verlaufen, dass der Strom der gekühlten Flüssigkeit an den internen Wänden des starren Elementes (34) entlang geleitet wird.

26. Vorrichtung nach einem beliebigen der Patentansprüche von 11 bis 25, **dadurch gekennzeichnet, dass** sie weitere Heizmittel (7) enthält, die entsprechend dem Kalibrierkopf (3) angeordnet sind und dazu dienen, eine zusätzliche direkte Wärme auf den Endbereich (2) zu erzeugen, wodurch ein solcher Abschnitt dazu gebracht wird, sich zusammenzuziehen und dicht an dem darunterliegenden Kalibrierkopf (3) anzuliegen, so dass es sich perfekt dessen Form anpasst.

27. Vorrichtung nach Patentanspruch 26, **dadurch gekennzeichnet, dass** die genannten weiteren Heizmittel (7) eine elektrische Wicklung (71) enthalten, die sich um den Kalibrierkopf (3) windet.

## Revendications

1. Procédé et dispositif pour élargir et donner une forme évasée au segment d'extrémité de raccordement de tuyaux orientés biaxialement en matériau thermoplastique, par:
- réchauffement du segment d'extrémité (2) d'un tube (1) biaxialement orienté pour le porter dans un état plastique;
- introduction progressive forcée d'un mandrin de calibration (3) dans le segment d'extrémité (2), formant dans ce dernier un logement annulaire circonférentiel (21) pour loger un joint d'étanchéité (22) correspondant pour le raccordement;
- refroidissement d'au moins la surface externe du segment d'extrémité formé (2) avant l'extraction dudit mandrin (3);
**caractérisé en ce que**:
- la phase de réchauffement du segment d'extrémité (2) du tube (1) orienté biaxialement est effectuée dans un four (4) présentant en son intérieur une distribution de la température qui augmente uniformément au-delà de l'entrée en pénétrant vers l'intérieur, le segment d'extrémité (2) du tube (1) orienté biaxialement étant réchauffé, alors qu'il est maintenu dans le four (4), à une correspondante température différenciée qui augmente en allant vers l'extrémité du segment d'extrémité (2), la température différenciée étant contrôlée de manière à ce que le diamètre interne (DN) du segment d'extrémité (2) se réduise progressivement lorsque la température augmente, laquelle température devient la température maximum (Tmax) sur l'extrémité du segment d'extrémité (2), le segment d'extrémité (2) du tube (1) subissant dans le même temps une réduction de sa longueur (L1) selon une longueur (ΔL) avec une correspondante augmentation de son épaisseur;
- une phase de réchauffement du mandrin de calibration (3) est effectuée avant l'introduction de ce dernier dans le segment d'extrémité (2).

2. Méthode selon la revendication 1, **caractérisée en ce que**, pendant l'introduction forcée du mandrin de calibration (3) dans le segment d'extrémité (2), se produit automatiquement une phase d'épaississement du segment d'extrémité (2), lequel atteint une épaisseur finale (S2) supérieure à l'épaisseur initiale (S1) du tube.

3. Méthode selon la revendication 1, **caractérisée en ce que** la limite supérieure de la température maximum (Tmax), située sur l'extrémité du segment d'extrémité (2) dans le four (4) est telle que le diamètre interne minimum (Dmin) du segment d'extrémité (2) doit être supérieur au diamètre minimum (dmn) de l'extrémité frontale du mandrin de calibration (3).

4. Méthode selon la revendication 1, **caractérisée en ce que** le réchauffement du mandrin de calibration (3) se produit à une température (TM) supérieure ou égale à la température maximum (Tmax) située sur l'extrémité du segment d'extrémité (2).

5. Méthode selon la revendication 1, **caractérisée en ce que**, avant la phase d'introduction du mandrin de calibration (3) réchauffé dans le segment d'extrémité (2), est prévue une phase préliminaire dans laquelle le segment d'extrémité est ultérieurement réchauffé à une température de déformation plastique permettant d'obtenir une correcte dilatation circonférentielle du segment d'extrémité (2) au moyen d'un élément rigide interne (34), afin d'empêcher, au moins pendant un tel réchauffement, toute possibilité de rétraction du segment d'extrémité (2), en contribuant à sa stabilisation dimensionnelle et de manière à favoriser sa suivante introduction sur le mandrin de calibration (3).

6. Méthode selon la revendication 5, **caractérisée en ce que** ladite phase de réchauffement préliminaire et de dilatation s'effectue elle aussi à une température différenciée, augmentant vers l'extrémité du segment d'extrémité (2) et avec une valeur moyenne supérieure à celle mesurable dans le four (4), de manière à faciliter le plus possible la suivante introduction sur le mandrin (3) en rendant progressivement plus résistantes les parois en aval de l'extrémité du segment d'extrémité (2).

7. Méthode selon les revendications 5 ou 6, **caractérisée en ce que** l'élément rigide (34) est également réchauffé.

8. Méthode selon les revendications 5, 6 ou 7, **caractérisée en ce que** l'épaisseur du segment d'extrémité (2) du tube (1) augmente progressivement pendant son réchauffement différencié dans le four (4), en subissant une phase de réduction de sa longueur (L1) selon une longueur (ΔL), ainsi que pendant l'introduction forcée du mandrin (3) dans le segment d'extrémité (2), et, enfin, pendant ladite ultérieure phase de réchauffement préliminaire, dans laquelle se produit un considérable épaississement de la paroi du segment d'extrémité (2) puisque l'élément rigide (34), ayant un diamètre supérieur à celui du diamètre interne (DN) du segment d'extrémité (2), est mobile dans les deux directions (d4, d5) puisqu'il doit être progressivement introduit et forcé dans la direction (d4) à l'intérieur du segment d'extrémité (2) maintenu en place, et ensuite extrait de celui-ci dans la direction opposée (d5), le segment d'extrémité (2) ne pouvant pas s'allonger dans la même direction puisque bloqué par un arrêt (82) fixe par rapport à l'élément rigide (34).

9. Méthode selon la revendication 5, **caractérisée en ce que** la limite supérieure de la température maximum (Tmax), située sur l'extrémité du segment d'extrémité (2) dans le four (4) est telle que le diamètre interne minimum (Dmin) du segment d'extrémité (2) doit être supérieur au diamètre minimum (dmn) de l'extrémité frontale de l'élément rigide (34).

10. Méthode selon n'importe laquelle des revendications précédentes, **caractérisée en ce que**, après l'introduction forcée du mandrin (3) dans le segment d'extrémité (2) e avant le refroidissement, est prévue une phase intermédiaire servant à développer une ultérieure chaleur directe sur le segment d'extrémité (2), de manière à induire ledit segment à se contracter et à adhérer étroitement au mandrin (3) de manière à en épouser parfaitement la forme.

11. Dispositif pour élargir et donner une forme évasée au segment d'extrémité de raccordement de tuyaux orientés biaxialement en matériau thermoplastique, comprenant:
- un mandrin de calibration (3), pouvant élargir le segment d'extrémité (2), auparavant réchauffé pour le porter dans un état plastique, en formant dans ce dernier un logement annulaire circonférentiel (21) pour loger un joint d'étanchéité (22) correspondant pour le raccordement;
- des moyens (6) pour refroidir au moins la surface externe du segment d'extrémité formé (2), avant l'extraction dudit mandrin (3);
**caractérisé en ce qu'**il comprend:
- un four (4) présentant en son intérieur une distribution de la température qui augmente uniformément au-delà de l'entrée en pénétrant vers l'intérieur, le segment d'extrémité (2) du tube (1) orienté biaxialement étant réchauffé, alors qu'il est maintenu dans le four (4), à une correspondante température différenciée qui augmente en allant vers l'extrémité du segment d'extrémité (2), la température différenciée étant contrôlée de manière à ce que le diamètre interne (DN) du segment d'extrémité (2) se réduise progressivement lorsque la température augmente, laquelle température devient la température maximum (Tmax) sur l'extrémité du segment d'extrémité (2), le segment d'extrémité (2) du tube (1) subissant dans le même temps une réduction de sa longueur (L1) selon une longueur (ΔL) avec une correspondante augmentation de son épaisseur;
- des moyens de réchauffement (5) capables de réchauffer le mandrin de calibration (3).

12. Dispositif selon la revendication 11, **caractérisé en ce que** le mandrin de calibration (3) comprend un long segment fuselé (31) sur la partie frontale, servant à faciliter l'introduction forcée du mandrin (3) dans le segment d'extrémité (2), l'extrémité frontale du mandrin (3) ayant un diamètre minimum (dmin) inférieur au diamètre interne minimum (Dmin) du segment d'extrémité (2).

13. Dispositif selon la revendication 11, **caractérisé en ce que** les moyens de réchauffement (5) comprennent au moins une résistance électrique (51) introduite dans le mandrin (3).

14. Dispositif selon la revendication 12, **caractérisé en ce que** les moyens de refroidissement (6) comprennent au moins des dispositifs (61) pour souffler de l'air froid.

15. Dispositif selon la revendication 14, **caractérisé en ce que** les moyens de refroidissement (6) comprennent de plus un circuit de fluide de refroidissement (62), introduit dans le mandrin (3).

16. Dispositif selon la revendication 14, comprenant une flange de calquage (8), positionnée en aval de l'extrémité du segment d'extrémité (2) du tube (1) positionnée sur le mandrin (3), **caractérisée en ce que** lesdits moyens de soufflage (61) sont positionnés autour du mandrin (3) et supportés par ladite flange de calquage (8).

17. Dispositif selon la revendication 12, **caractérisé en ce qu'**il comprend une station (33) pour l'ultérieur réchauffement préliminaire et la dilatation circonférentielle du segment d'extrémité (2), avant qu'il ne soit inséré sur le mandrin de calibration (3), ladite station (33) étant pourvue d'au moins un élément rigide (34) pouvant être forcé et introduit progressivement dans le segment d'extrémité (2), bloqué par des mors bilatéraux (11), après le réchauffement optimum au moins de l'élément rigide (34) par des moyens de réchauffement (55), jusqu'à permettre une température de déformation correcte du segment d'extrémité (2), ledit élément rigide (34) ayant un diamètre frontal minimum (dmn) qui augmente progressivement et reste ensuite constant sur une valeur (DE) correspondant à celle définitive du segment d'extrémité formé (2).

18. Dispositif selon la revendication 17, **caractérisé en ce que** la station (33) comprend un second four (44) à température différenciée augmentant vers l'intérieur du four et avec une valeur moyenne supérieure à celle mesurable à l'intérieur du four précédent (4).

19. Dispositif selon la revendication 17, **caractérisé en ce que** la station (33) est supportée de manière coulissante et en ce que l'élément rigide (34) est mobile dans les deux directions (d4, d5) par rapport à la station (33).

20. Dispositif selon la revendication 19, **caractérisé en ce que** la station (33) comprend une flange (81), individuant à l'intérieur du second four (44) un arrêt (82) du bord frontal du segment d'extrémité (2), où il exerce une contrainte pendant l'extraction dans la direction (d5) de l'élément rigide (34) du segment d'extrémité.

21. Dispositif selon la revendication 18, **caractérisé en ce que** ledit second four (44) comprend, en son intérieur, un flux de fluide de refroidissement qui s'écoule de l'extérieur vers l'intérieur du four, pour créer sa température différenciée.

22. Dispositif selon n'importe laquelle des revendications 18 à 21, **caractérisé en ce qu'**il comprend une sonde (45) servant à réguler la chaleur produite par une résistance en bande (56), disposée circonférentiellement autour dudit second four (44).

23. Dispositif selon la revendication 18, **caractérisé en ce que** l'élément rigide (34) présente une épaisseur de la paroi interne qui augmente vers l'intérieur dudit second four (44).

24. Dispositif selon la revendication 21, **caractérisé en ce que** l'élément rigide (34) comprend une canalisation (35) dans laquelle s'écoule le fluide refroidit, terminant en correspondance d'un diffuseur (36), situé sur l'extrémité frontale libre de l'élément rigide (34), qui oriente le flux de fluide refroidit vers l'extrémité opposée, jusqu'à déboucher vers l'extérieur, au travers d'orifices (37) prévus le long de l'élément rigide (34).

25. Dispositif selon la revendication 24, **caractérisé en ce que** ledit diffuseur (36) est pourvu d'orifices (38) inclinés de manière à orienter le flux de fluide refroidit le long des parois internes de l'élément rigide (34).

26. Dispositif selon n'importe laquelle des revendications 11 à 25, **caractérisé en ce qu'**il comprend d'autres moyens de réchauffement (7), disposés en correspondance du mandrin (3), servant à développer de la chaleur additionnelle directe sur le segment d'extrémité (2), induisant ce segment à se contracter et adhérer étroitement au mandrin (3), pour épouser parfaitement ses formes.

27. Dispositif selon la revendication 26, **caractérisé en ce que** lesdits autres moyens de réchauffement (7) comprennent une bobine électrique (71) enroulée autour du mandrin (3).
